# EUROPEAN PATENT SPECIFICATION

(11) **EP 4 183 096 B1**
(45) Date of publication and mention of the grant of the patent: **17.12.2025**
(21) Application number: 21749872.4
(22) Date of filing: 20.07.2021
(51) Int. Cl.: H04L 9/00, H04L 9/08

(54) **KEY EXCHANGE PROTOCOL**
SCHLÜSSELAUSTAUSCHPROTOKOLL
PROTOCOLE D'ÉCHANGE DE CLÉS

(30) Priority: 20.07.2020 GB 202011219
(43) Date of publication of application: 24.05.2023
(73) Proprietor: Arqit Limited, London SW1H 0BF (GB)
(72) Inventor: BURNS, Daryl, Cheltenham, Gloucestershire GL51 6JD (GB); CHILDE, Barry, Seaford, Sussex BN25 2QB (GB); WILLIAMS, David, Horsham, Surrey RH13 6TL (GB)
(74) Representative: Crowell & Moring U.K. LLP
(86) International application number: PCT/GB2021/051863
(87) International publication number: WO 2022/018432

(56) References cited:
- FERNANDEZ-CARAMES TIAGO M: "From Pre-Quantum to Post-Quantum IoT Security: A Survey on Quantum-Resistant Cryptosystems for the Internet of Things", IEEE INTERNET OF THINGS JOURNAL, IEEE, USA, vol. 7, no. 7, 12 December 2019 (2019-12-12), pages 6457 - 6480, XP011798218, DOI: 10.1109/JIOT.2019.2958788
- ALAN SZEPIENIEC ET AL: "Key Encapsulation from Noisy Key Agreement in the Quantum Random Oracle Model", vol. 20181002:122153, 2 October 2018 (2018-10-02), pages 1 - 48, XP061027288, Retrieved from the Internet <URL:http://eprint.iacr.org/2018/884.pdf> [retrieved on 20181002]

## Description

The present application relates to a system, apparatus and method for secure communications based on quantum key exchange/distribution protocols and post-quantum cryptography and applications thereto.

### Background

Quantum key distribution (QKD) is a secure communication method which implements a cryptographic QKD protocol involving components of quantum mechanics for distributing cryptographic keys. It enables two parties to produce a shared random secret key or cryptographic key known only to them, which can then be used to encrypt and decrypt messages. Following the arrival of large-scale quantum computers, classical (e.g. factorisation and discrete-log based) key exchange methods for key agreement will be vulnerable and unable to provide security. Post-quantum algorithms offer an alternative but suffer from the possibility of yet-to-be-discovered mathematical attacks on their foundations. QKD offers unconditionally-secure agreement of keys between two parties which possess an initial amount of shared secret material but, due to its reliance on physical implementations, the possibility of malfunctions or physical attacks remains. Prior art solutions are disclosed in documents FERNANDEZ-CARAMES TIAGO M: "From Pre-Quantum to Post-Quantum loT Security: A Survey on Quantum-Resistant Cryptosystems for the Internet of Things", IEEE INTERNET OF THINGS JOURNAL, IEEE, USA, vol. 7, no. 7, 12 December 2019 (2019-12-12), pages 6457-6480 and ALAN SZEPIENIEC ET AL: "Key Encapsulation from Noisy Key Agreement in the Quantum Random Oracle Model", International Association for Cryptologic Research, vol. 20181002:122153 2, Report 2018/884, October 2018 (2018-10-02), pages 1-48.

There is a desire for a more improved secure communications that may take advantage of QKD and post-quantum cryptographic algorithms in a more secure manner.

The embodiments described below are not limited to implementations which solve any or all of the disadvantages of the known approaches described above.

### Summary

The invention is defined in the appended set of claims.

This Summary is provided to introduce a selection of concepts in a simplified form that are further described below in the Detailed Description. This Summary is not intended to identify key features or essential features of the claimed subject matter, nor is it intended to be used to determine the scope of the claimed subject matter; variants and alternative features which facilitate the working of the invention and/or serve to achieve a substantially similar technical effect should be considered as falling into the scope of the invention disclosed herein.

The present disclosure provides method(s), apparatus and system(s) of secure communications using a hybrid mechanism or algorithm based on a combination of using components of post-quantum cryptographic algorithms and quantum key distribution (QKD) to allow a resulting algorithm to deliver security determined by the sum of the strengths of these components. The hybrid mechanism or algorithm including the post-quantum cryptographic algorithm and QKD components is adapted to enable at least two parties who hold some initial shared secret material for authentication purposes to agree additional shared material over an insecure public channel such that, without limitation, for example: a successful attack on the QKD components of the hybrid mechanism/algorithm will be insufficient to recover the shared key due to a failure to also compromise the post-quantum cryptographic algorithmic component (e.g. the cryptographic key exchanged and used between the at least two parties); a successful attack on the post-quantum cryptographic algorithmic component of the hybrid mechanism/algorithm will be insufficient to recover the shared key due to a failure to also compromise the QKD component. The hybrid mechanism/algorithm, apparatus, method and/or system is configured to combine QKD with modifications to the bit-flipping key encapsulation (BIKE) post quantum key encapsulation (KEM) cryptographic algorithm.

In a first aspect, the present disclosure provides a computer-implemented method of secure communications for a sender device comprising: encapsulating and/or encrypting a message using a post-quantum cryptographic algorithm and quantum key, QK, material derived from QK distribution with a receiver device; adding noise to the encapsulated or encrypted message; and sending the noisy encapsulated and/or encrypted message to the receiver device.

In a second aspect, the present disclosure provides a computer-implemented method of secure communications for a receiver device comprising: receiving a noisy encapsulated and/or encrypted message from a sender device, the noisy encapsulated and/or encrypted message having been encapsulated and/or encrypted using a post-quantum cryptographic algorithm and quantum key, QK, material derived from QK distribution with the sender device; decapsulating and/or decrypting the received message using the corresponding QK used by the sender device; decapsulating and/or decrypting the QK- decapsulated/decrypted message using the corresponding post-quantum cryptographic algorithm used by the sender; and outputting the message for use by the receiver device.

The noisy encapsulated and/or encrypted message of the second aspect may have been produced in accordance with the first aspect outlined above.

In a third aspect, the present disclosure provides a computer-implemented method of secure communication between a sender device and receiver device comprising: encapsulating and/or encrypting, by the sender device, a message using a post-quantum cryptographic algorithm and quantum key, QK, material derived from QK distribution with a receiver device; adding noise, by the sender device, to the encapsulated and/or encrypted message; and sending, by the sender device, the noisy encapsulated and/or encrypted message to the receiver device; receiving, by the receiver device, the noisy encapsulated and/or encrypted message from the sender device; decapsulating and/or decrypting, by the receiver device, the received message using the corresponding QK used by the sender device; decapsulating and/or decrypting, by the receiver device, the QK-decapsulated/decrypted message using the corresponding post-quantum cryptographic algorithm used by the sender; and outputting, by the receiver device, the message.

As an option, the computer-implemented method according to any of the first, second and/or third aspects, further comprising the receiver device choosing a secret and publishing a public key. As another option, the computer-implemented method according to any of the first, second and/or third aspects, further comprising the sender device generating a random message M of length L using a random source. As a further option, the computer-implemented method according to any of the first, second and/or third aspects, further comprising the sender device performing encoding the message M using the published public key and the QK material.

As an option, the computer-implemented method according to any of the first, second and/or third aspects, further comprising the sender device performing steps of: generating a QK codeword by using the quantum key material, which is known by the receiver device, for computing an exclusive-OR (XOR) of the QK material with a codeword representing the message encoded with the published public key; generating a ciphertext, comprising first and second ciphertext portions c_0 and c_1, by corrupting or flipping random bits of the QK codeword; and sending the ciphertexts to the receiver device.

As a further option, the computer-implemented method according to any of the first, second and/or third aspects, further comprising the receiver device performing the steps of: receiving ciphertext, c_1 and c_0, from the sender device; decrypting and/or decapsulating the first ciphertext portion c_0 using QK material used by the sender device and known by the receiver device based on QKD process between sender device and receiver device; further decrypting or decapsulating using post quantum cryptography algorithm.

As another option, the computer-implemented method according to any of the first, second and/or third aspects further comprising the receiver device performing the steps of: generating a noisy codeword based on computing an exclusive OR, XOR, of the QK material with a received portion of the ciphertext, c_0; and decrypting and/or decapsulating the noisy codeword by applying an error decoding algorithm to recover the encoded message.

As another option, the computer-implemented method according to any of the first, second and/or third aspects, wherein the post-cryptographic algorithm is based on a bit-flipping key encapsulation, BIKE, post-quantum key encapsulation mechanism, KEM, cryptographic algorithm.

As another option, the computer-implemented method according to any of the first, second and/or third aspects, wherein the error decoding algorithm is a medium density parity check code, MDPC, decoding algorithm.

In a fourth aspect, the present disclosure provides a sender apparatus comprising a processor unit, a memory unit, and a communication interface, the processor unit connected to the memory unit and the communication interface, wherein the processor unit, memory unit and communication interface are adapted to implement the computer-implemented method of any of the first aspect.

In a fifth aspect, the present disclosure provides a receiver apparatus comprising a processor unit, a memory unit, and a communication interface, the processor unit connected to the memory unit and the communication interface, wherein the processor unit, memory unit and communication interface are adapted to implement the computer-implemented method of any of the second aspect.

In a sixth aspect, the present disclosure provides a system comprising: a sender device comprising an apparatus according to the fourth aspect; and a receiver device comprising an apparatus according to the fifth aspect; wherein the sender device and receiver device are configured to communicate with each other and implement the computer-implemented method of the third aspect.

In a seventh aspect, the present disclosure provides a computer-readable medium comprising computer code or instructions stored thereon, which when executed on a processor, causes the processor to perform the computer implemented method according to the first aspect.

In an eighth aspect, the present disclosure provides a computer-readable medium comprising computer code or instructions stored thereon, which when executed on a processor, causes the processor to perform the computer implemented method according to the secondaspect.

In a ninth aspect, the present disclosure provides a computer-readable medium comprising computer code or instructions stored thereon, which when executed on a processor, causes the processor to perform the computer implemented method according to the third aspect.

In a tenth aspect, the present disclosure provides a computer program product comprising instructions which, when the program is executed by a computer, cause the computer to carry out the method of the first aspect.

As an option, the computer program product may be executed by a computer or system-on-chip processor. A system-on-chip (SOC) is an integrated circuit that combines all of the functions of a computer or other electronic system onto one microchip. Commonly found in smartphones, wireless routers, tablets, and wearable technology, SOCs process the increasingly complex computing needs of many small devices.

In an eleventh aspect, the present disclosure provides a computer program product comprising instructions which, when the program is executed by a computer, cause the computer to carry out the method of the second aspect.

In a twelfth aspect, the present disclosure provides a computer program product comprising instructions which, when the program is executed by a computer of computers, cause the computer to carry out the method of the third aspect.

The methods and/or process(es) described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor or a system on chip solution, such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1a is a schematic diagram illustrating an example BIKE encapsulation/encryption process for use according to some embodiments of the invention;
Figure 1b is a schematic diagram illustrating another example BIKE decapsulation/decryption process for use with figure 1a according to some embodiments of the invention;
Figures 2a and 2b is a flow diagram illustrating an example encapsulation/encryption and decapsulation/decryption hybrid process(es) according to some embodiments of the invention;
Figures 2c to 2d are further schematic diagrams illustrating a further example encapsulation/encryption and decapsulation/decryption hybrid process(es) according to some embodiments of the invention;
Figure 3 is a schematic diagram illustrating an example computing system, device or apparatus according to some embodiments of the invention; and
Common reference numerals are used throughout the figures to indicate similar features.

### Detailed Description

Embodiments of the present invention are described below by way of example only. These examples represent the best mode of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

The present disclosure provides method(s), apparatus and system(s) for secure communication between a sender device and a receiver device using a hybrid mechanism or algorithm based on using quantum key distribution material and post-quantum cryptographic algorithms based on a combination of using components of post-quantum cryptographic algorithms and quantum key distribution (QKD) to allow a resulting algorithm to deliver security determined by the sum of the strengths of these components. The hybrid mechanism or algorithm including the post-quantum cryptographic algorithm and QKD components is adapted to enable at least two parties who hold some initial shared secret material for authentication purposes to agree additional shared material over an insecure public channel such that, without limitation, for example: a successful attack on the QKD components of the hybrid mechanism/algorithm will be insufficient to recover the shared key due to a failure to also compromise the post-quantum cryptographic algorithmic component (e.g. the cryptographic key exchanged and used between the at least two parties); a successful attack on the post-quantum cryptographic algorithmic component of the hybrid mechanism/algorithm will be insufficient to recover the shared key due to a failure to also compromise the QKD component. The hybrid mechanism/algorithm, apparatus, method and/or system is configured to combine QKD with modifications to the bit-flipping key encapsulation (BIKE) post quantum key encapsulation (KEM) cryptographic algorithm.

For example, hybrid mechanism/algorithm, apparatus, method and/or system(s) are provided for performing a secure communication between a sender device and receiver device. This includes encapsulating or encrypting, by the sender device, a message using a post-quantum cryptographic algorithm and quantum key (QK) material derived from QK distribution with a receiver device. Noise is added, by the sender device, to the encapsulated or encrypted message. The sender device sends the noisy encapsulated/encrypted message to the receiver device. On receipt of the noisy encapsulated or encrypted message from the sender device, the receiver device decapsulates or decrypts the received message using corresponding QK used by the sender device. The receiver device decapsulates or decrypts the QK decapsulated/decrypted message using the corresponding post-quantum cryptographic algorithm used by the sender, and the receiver device outputs or uses the message sent by the sender. The post-quantum cryptographic algorithm is the BIKE algorithm, which may use medium density parity check codes, MDPC, decoding algorithms.. The sender and receiver may be a sender device and a receiver device, respectively. The sender and/or receiver device may each be any device or communication device capable of communicating with each other and capable of performing post-quantum cryptography and quantum key distribution for exchanging quantum key materials with each other, such that the QK materials are known by the sender and receiver. The hybrid mechanism/algorithm, apparatus, method and/or system(s) as described herein may be used to protect, without limitation, for example communications between receiver and senders/transmitters, cloud services and/or transactions and the like.

Post-quantum algorithms offer an alternative to classical encryption algorithms but suffer from the possibility of yet-to-be-discovered mathematical attacks on their foundations. Meanwhile, quantum key distribution offers unconditionally-secure agreement of keys between two parties which possess an initial amount of shared secret material but, due to its reliance on physical implementations, the possibility of malfunctions or physical attacks remains.

The hybrid mechanism or algorithm as herein described provides a combination of these two techniques that allows the resulting hybrid algorithm to deliver security determined by the sum of the strengths of the components. In practical terms, the inventions allows two parties who hold some initial shared secret material (e.g. quantum key distributed material) for authentication purposes to agree additional shared material over an insecure public channel such that: a successful attack on the QKD components of the hybrid algorithm will be insufficient to recover the shared key due to a failure to also compromise the post-quantum algorithmic component; and a successful attack on the post-quantum algorithmic component of the hybrid algorithm will be insufficient to recover the shared key due to a failure to also compromise the QKD component. In particular, the strengths of each of the post-quantum algorithmic component and the QKD component compensate for the weaknesses of the other to provide a more robust and secure system.

An example of the hybrid algorithm/mechanism is described, by way of example only and is not limited to, combining QKD with the BIKE (bit-flipping key encapsulation) post quantum key encapsulation mechanism (KEM) algorithm.

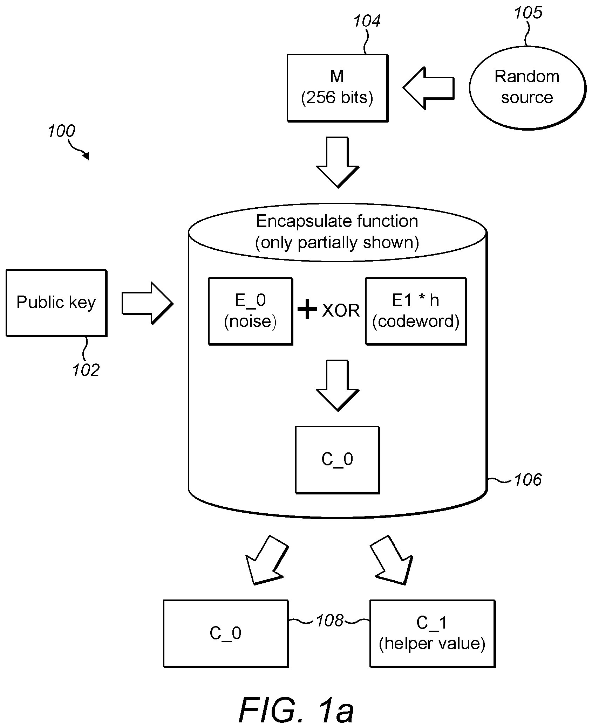

Figure 1a is a schematic diagram illustrating an example of a BIKE encapsulation (encryption) algorithm 100 for encoding a key for use with some embodiments of the invention. In general, the BIKE algorithm relies on the sender (e.g. Alice) encoding a secret key, or message M of randomly generated bits, and then corrupting a number of randomly-chosen bit positions of the encoded key before transmitting to the receiver (e.g. Bob). Note: the BIKE 'family' of algorithms comprises a single parameterised variant, with previous versions of BIKE having featured additional variants. The receiver possesses privileged information (e.g. a private key) which allows them to efficiently decode the corrupted codeword, recovering the encoded secret key. The BIKE encapsulation (encryption) algorithm 100 is based on the following steps of: In step 102, Bob (the receiver) chooses a secret (p, q) and publishes a public key based on p/q modulo a quotient polynomial as a cyclic code. In step 104, Alice (the sender) generates, in this example, a cryptographic key represented by a random message M of length L (e.g. L = 256) using a random source 105. In step 106, Alice encodes the message M using Bob's public key to produce codeword (e.g. E1*h) to which noise (e.g. E_0) is added (e.g. added using an exclusive or (XOR) operation, E_0 XOR E1*h) to generate a ciphertext consisting of c_0 and c_1, where c_0 represents a 'noisy' codeword in which features approximately sqrt(n) bits which have been flipped or corrupted. The ciphertext c_0 and c_1 is sent to Bob.

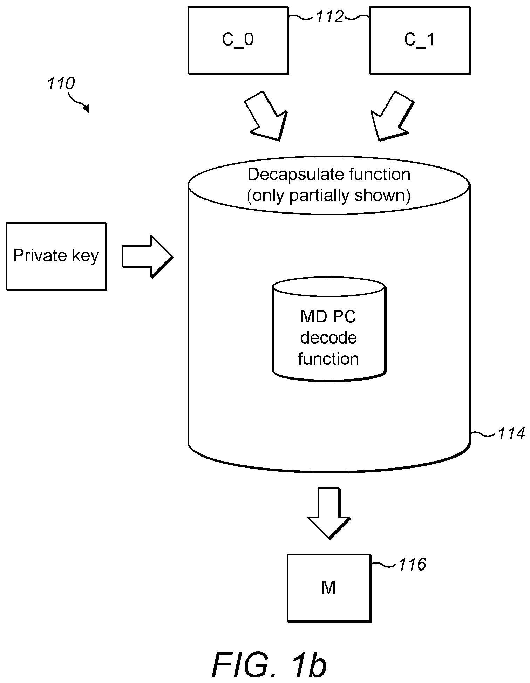

Figure 1b is a schematic diagram illustrating an example of a BIKE decapsulation algorithm 110 for decoding the message M or key sent from Alice in figure 1a for use with some embodiments of the invention. The BIKE decapsulation algorithm 110 includes the following steps of: In step 112, Bob receives the ciphertext c_0 and c_1 from Alice. In step 114, Bob, using his private key (corresponding to the published public key that was published in step 102 of figure 11a), employs a Medium Density Parity Check (MDPC) decoding algorithm to resolve the noisy codeword c_0 into the message M chosen by Alice. Bob may use message M for, without limitation, for example encrypting communications between Bob and Alice and vice versa.

Conventional QKD includes the following steps of: 1) Alice and Bob *a priori* possess a volume of secret key material known only to Alice and Bob; 2) Alice and Bob engage in a number of QKD 'rounds' in which their existing shared key material is used for process authentication and allows them to progressively expand the volume of shared key material they hold; 3) Surplus shared key material (beyond that required to sustain future QKD rounds) is made available for securing classical communications.

Although the BIKE encapsulation (encryption) algorithm 100 and BIKE decapsulation (decryption) was described in relation to sending a cryptographic key from Alice to Bob, this is by way of example only and the invention is not so limited, it is to be appreciated by the skilled person that the random message M generated by Alice may instead be a message M that Alice wishes to send to Bob, where the message M has been encrypted with a generated cryptographic key. For example, in step 104 the random source may generate a cryptographic key which may be XORed with the information Alice wishes to send to generate the message M. Thus, Alice sends, using codewords C_0 and C_1, the ciphertext representing the message M in figure 1a, which Bob subsequently decrypts/decapsulates in figure 1b.

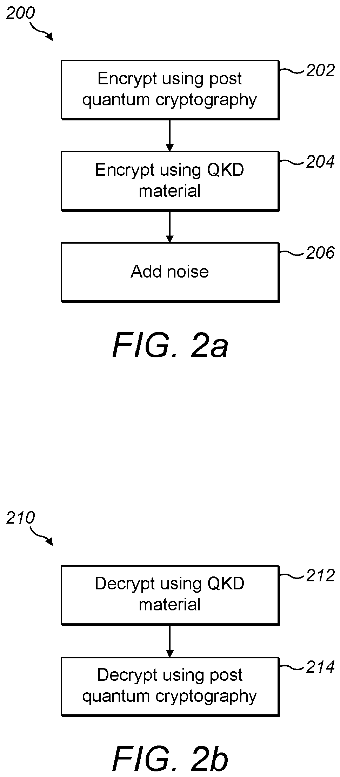

Figure 2a is a schematic diagram illustrating an example hybrid encapsulation (encryption) process 200 between a sender and a receiver according to some embodiments of the invention. Figure 2b is a schematic diagram illustrating an example hybrid decapsulation (decryption) process 210 for use with the hybrid encapsulation (encryption) process 200 of figure 2a according to some embodiments of the invention. The hybrid encapsulation process 200 uses a combination of QKD material or quantum key (QK) material and post-quantum cryptographic components such as, for example, the BIKE algorithm as described with reference to figures 1a and 1b, combinations thereof, modifications thereto, and the like and/or as the application demands. The sender and receiver may be a sender device and a receiver device, respectively. The sender and/or receiver device may each be any device or communication device capable of communicating with each other and capable of performing post-quantum cryptography and quantum key distribution for exchanging quantum key materials with each other.

The hybrid encapsulation (encryption) process 200 includes the following steps of: In step 202, a sender may encrypt a message using BIKE algorithm; In step 204, the sender may encrypt further using quantum key (QK) material (e.g. the QK one-time-pad (OTP) material); In step 206, the sender adds noise to the BIKE and QK encrypted message. The process of adding noise may be carried out as described above in relation to Fig. 1a. The BIKE and QK encrypted message may be sent from the sender to the receiver. Referring to figure 2b, on receiving the BIKE and QK encrypted message from the sender, the receiver may perform the hybrid decapsulation process 210 based on the following steps of: In step 212, decrypt using quantum key (QK) material (e.g. the QK one-time-pad (OTP) material); In step 214, remove the noise and decrypt using BIKE algorithm.

For example, the QK one-time-pad (OTP) material used by the sender and receiver may have been previously shared between sender and receiver using a QKD protocol and the like. So, essentially, the QK material may be considered to be known by sender and receiver.

Thus, instead of removing noise prior to decrypting using the QK material, the hybrid encapsulation/decapsulation (encryption/decryption) process(es) 200 and 210 first decrypts using the QKD material, then removes noise using the BIKE algorithm. Thus, the noise removal procedure is inverted, which is made possible by the nature of BIKE and its compatibility with one-time pad encryption using QKD-sourced material. In security terms, this confers the advantage that, even if an attacker were able to break the BIKE encryption (encapsulation), leveraging this ability (even in a partial sense) would not be possible without breaking the QKD one-time pad encryption first.

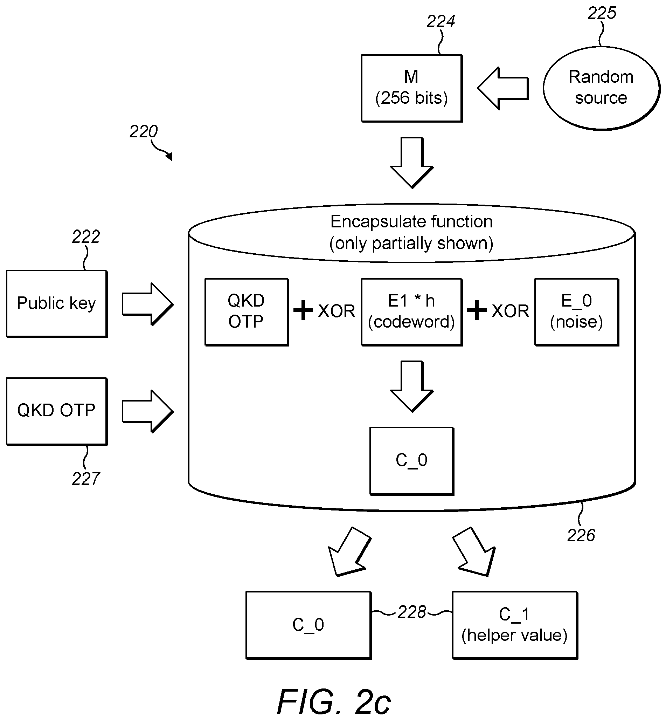

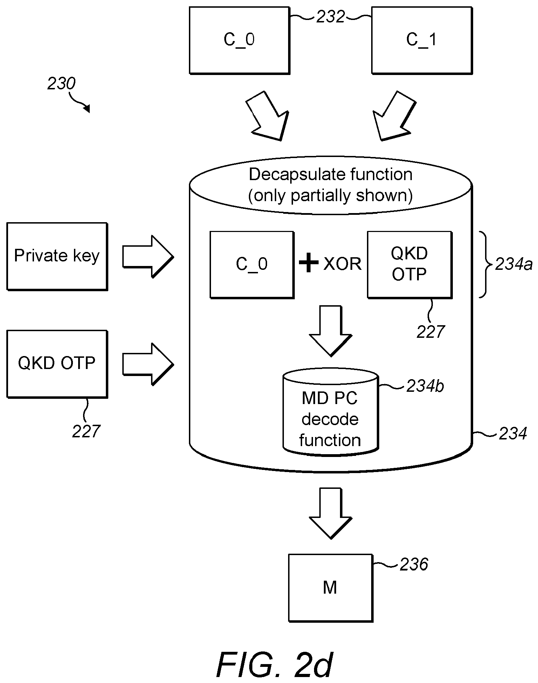

Figures 2c and 2d are further schematic diagrams illustrating further examples of hybrid encapsulation/decapsulation (encryption/decryption) processes 220 and 230 with further modifications to the hybrid encapsulation/decapsulation (encryption/decryption) processes 200 and 210 as described with reference to figures 2a and 2b according to some embodiments of the invention. Referring to figure 2c, the hybrid encapsulation (encryption) process 220 includes the following steps of: In step 222, Bob (the receiver) chooses a secret (p, q) and publishes a public key based on p/q modulo a quotient polynomial as a cyclic code. In step 224, Alice (the sender) generates, in this example, a cryptographic key represented by a random message M of length L (e.g. L = 256) using a random source 225. In step 226, Alice encodes the message M using Bob's public key (e.g. E1*h) and also uses quantum key material 227 to encode the codeword (e.g. E1*h). Alice takes the quantum key material 227 (known also only to Bob) and computes the exclusive-OR (XOR) of this quantum key material 227 with the codeword (e.g. E1*h) to produce a QK codeword (e.g. QK codeword = [QKD_OTP XOR (E1*h)]). Then, from the QK codeword, Alice produces a ciphertext consisting of c_0 (e.g. QK Codeword XOR (E_0(noise)) and c_1, where c_0 represents a 'noisy' codeword which features approximately sqrt(n) bits which have been flipped or corrupted (e.g. E_0 (noise)). As an option, Alice may corrupt or flip approximately sqrt(n) bits of the resulting value and transmit the result to Bob along with a nonce. In step 228, Alice sends c_0 and c_1 to Bob (the receiver).

Referring to figure 2d, the hybrid decapsulation (decryption) process 230 is used by the receiver (e.g. Bob) on receiving the c_0 and c_1 ciphertext from Alice transmitted at end of the hybrid encapsulation (encryption) process 220 of figure 2c. The hybrid decapsulation (decryption) process 230 includes the following steps of: In step 232, Bob receives the ciphertext (e.g. c_0 and c_1) from Alice. In step 234, on receipt of the ciphertext c_0 and c_1 from Alice, Bob decrypts or decapsulates the cipher text c_0 using QK material first then decrypts or decapsulates using the post quantum cryptography algorithm (e.g. BIKE decapsulation/decryption) thereafter. In step 234a, Bob (e.g. the receiver) uses the quantum key (QK) material 227 (e.g. QKD OTP) (also known by Alice) and XORs this with the noisy codeword (e.g. c_0 XOR QKD OTP) to decrypt the QK codeword into a noisy codeword. In step 234b, this noisy codeword is decrypted/decapsulated by applying the MDPC decoding algorithm to recover the encoded message M (or secret), which is output in step 236.

Although the hybrid encapsulation (encryption) algorithm 220 and hybrid decapsulation (decryption) algorithm 230 as described with reference to figures 2c and 2d was described in relation to sending a cryptographic key (or random message M) from Alice to Bob, this is by way of example only and the invention is not so limited, it is to be appreciated by the skilled person that the random message M generated by Alice may instead be a message M that Alice wishes to send to Bob, where the message M has been encrypted with a generated cryptographic key. For example, in step 224 the random source may generate a cryptographic key which may be XORed with the information Alice wishes to send to generate the message M. Thus, Alice sends, using codewords c_0 and c_1, the ciphertext representing the message M in figure 2c, which Bob subsequently decrypts/decapsulates in figure 2d.

Furthermore, the Quantum key (QK) material can be re-used, conditioned on hash-function being unbreakable and nonces being of sufficient size. If nonces are used, then, for security purposes or one or more use cases, they should never be used more than once and should be random and independent. However, this restriction may be relaxed depending on the use case and/or as the application demands.

Further modifications and/or alternative applications may be applied to the hybrid encapsulation and/or decapsulation process(es) 200, 210, 220, and/or 230 of figures 2a to 2c according to some embodments of the invention. There may be different methods of using and/or combining the quantum key (QK) material (or quantum key) with the post-quantum cryptographic algorithm ciphertext (e.g. BIKE). For example, a first use case may involve a QKD-sourced one-time pad key that is used directly. While highly secure, this has the disadvantage that it leads to the consumption of one-time pad material which may be scarce in practice. As well, the post cryptographic algorithm, (e.g. BIKE), would consume on the order of, without limitation, for example 25,000 bits of such one-time pad material for each encryption). In an alternative or second user case, a cryptographically-secure mask-generation function may be employed along with a nonce (number used once) in step 226 such that the one-time pad key is concatenated with the nonce and the mask generation function used to generate a sequence of bits of the required length for XORing with the result of step 224. The nonce would then accompany the resulting ciphertext in step 228, allowing the recipient Bob to recreate the mask value in step 234. This optimisation allows secure reuse of QKD-derived one-time pad material, at the expense of relying on the security of a cryptographically-secure mask generation function.

During the process of establishing a key via QKD a certain level of errors are expected to occur via natural processes and potential attempts at eavesdropping. In normal usage these errors are identified and removed. It is possible that these errors could be instead used as an input to the bit-flipping corruption of approximately sqrt(n) bits of the codeword produced by BIKE, removing the need to source this randomness from an external process
It is noted that in the BIKE algorithm, the second ciphertext component is denoted c_1 and, assuming that the SHA384 hash function is secure, does not necessarily need protection using one-time pad material in the hybrid encapsulation/decapsulation process(es) 200, 210, 220 and/or 240. As an option, the additional protection of the c_1 value using QKD-derived one-time pad material may lend to further enhanced security at the cost of increased one-time-pad (OTP) consumption.

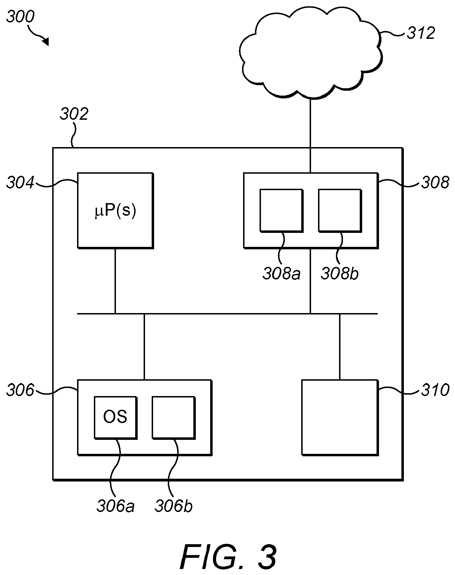

Figure 3a is a schematic diagram of an example computing system 300 for use in implementing and/or performing a hybrid encapsulation/decapsulation mechanism/process according to aspects of the invention. Computing system 300 may be used to implement one or more aspects of the systems, apparatus, methods, process(es), device(s) and/or use cases as described with reference to figures 1a-2d, combinations thereof, modifications thereto, as herein describe and/or as the application demands. Computing system 300 includes a computing device or apparatus 302 (e.g. sender, receiver, sender device or receiver device etc.). The computing device or apparatus includes one or more processor unit(s) 304, memory unit 306 and a communication interface 308. The computing device or apparatus may also include, without limitation, for example, a first conventional communication interface 308a and/or a second quantum communication interface 308b, a random symbol/number generator 310. For example, the first conventional communication interface 308a may be adapted for communicating over classical communications networks and the second quantum communication interface 308b may be adapted for communicating over quantum communication channels. These may be used for performing post-quantum cryptography, key exchange, and/or QKD process(es) and the like. The one or more processor unit(s) 304 are connected to the memory unit 306, the communication interface 308 (e.g. the first communication interface 308a and the second quantum communication interface 308b), and/or the random symbol/number generator 310. The communications interface 308 may connect the computing device or apparatus 302 with one or more other computing devices and/or apparatus (e.g. intermediary device, first and/or second device(s)) (not shown). The memory unit 306 may store one or more program instructions, code or components such as, by way of example only but not limited to, an operating system 306a for operating computing device 302, and a data store 306b for storing computer program instructions, executable code, code and/or components associated with implementing the functionality and/or one or more function(s) or functionality associated with one or more hybrid encapsulation/decapsulation (encryption/decryption) mechanisms/systems and/or process(es) QKD protocol(s) of performing a the hybrid encapsulation/decapsulation (encryption/decryption) process(es)/apparatus according to the invention, system(s)/platforms, combinations thereof, modifications there to, and/or as described herein with reference to at least any one of figure(s) 1a to 2d.

In the embodiment described above the server may comprise a single server or network of servers. In some examples the functionality of the server may be provided by a network of servers distributed across a geographical area, such as a worldwide distributed network of servers, and a user may be connected to an appropriate one of the network of servers based upon a user location.

The above description discusses embodiments of the invention with reference to a single user for clarity. It will be understood that in practice the system may be shared by a plurality of users, and possibly by a very large number of users simultaneously.

The embodiments described above are fully automatic. In some examples a user or operator of the system may manually instruct some steps of the method to be carried out.

In the described embodiments of the invention the system may be implemented as any form of a computing and/or electronic device. Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

Various functions described herein can be implemented in hardware, software, or any combination thereof. If implemented in software, the functions can be stored on or transmitted over as one or more instructions or code on a computer-readable medium. Computer-readable media may include, for example, computer-readable storage media. Computer-readable storage media may include volatile or non-volatile, removable or non-removable media implemented in any method or technology for storage of information such as computer readable instructions, data structures, program modules or other data. A computer-readable storage media can be any available storage media that may be accessed by a computer. By way of example, and not limitation, such computer-readable storage media may comprise RAM, ROM, EEPROM, flash memory or other memory devices, CD-ROM or other optical disc storage, magnetic disc storage or other magnetic storage devices, or any other medium that can be used to carry or store desired program code in the form of instructions or data structures and that can be accessed by a computer. Disc and disk, as used herein, include compact disc (CD), laser disc, optical disc, digital versatile disc (DVD), floppy disk, and blu-ray disc (BD). Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, DSL, or wireless technologies such as infrared, radio, and microwave are included in the definition of communication medium. Combinations of the above should also be included within the scope of computer-readable media.

Alternatively, or in addition, the functionality described herein can be performed, at least in part, by one or more hardware logic components. For example, and without limitation, hardware logic components that can be used may include Field-programmable Gate Arrays (FPGAs), Application-Program-specific Integrated Circuits (ASICs), Application-Program-specific Standard Products (ASSPs), System-on-a-chip systems (SOCs), Complex Programmable Logic Devices (CPLDs), etc.

Although illustrated as a single system, it is to be understood that the computing device may be a distributed system. Thus, for instance, several devices may be in communication by way of a network connection and may collectively perform tasks described as being performed by the computing device.

Although illustrated as a local device it will be appreciated that the computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages. Variants should be considered to be included into the scope of the invention.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term "exemplary" is intended to mean "serving as an illustration or example of something".

Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A computer-implemented method of secure communications for a sender device comprising:
encapsulating or encrypting a message using a post-quantum cryptographic algorithm (100) and quantum key, QK, material derived from QK distribution with a receiver device wherein encapsulating or encrypting the message includes encoding (106) the message using a published public key and the QK material to generate a codeword, wherein the published public key is published by the receiver device (102);
adding noise to the encapsulated or encrypted message; and
sending the noisy encapsulated or encrypted message to the receiver device.

2. The computer-implemented method of claim 1, further comprising generating a random message M of length L using a random source.

3. The computer-implemented method of any preceding claim, wherein encapsulating or encrypting the message includes generating a QK codeword by using the QK material to compute an exclusive-OR (XOR) of the QK material with the codeword, and optionally,
wherein adding noise to the encapsulated or encrypted message includes generating a ciphertext, wherein a portion of the ciphertext is generated by corrupting or flipping random bits of the QK codeword; and
wherein sending the noisy encapsulated or encrypted message to the receiver device includes sending the cipihertext to the receiver device.

4. A computer-implemented method of secure communications for a receiver device comprising:
receiving a noisy encapsulated or encrypted message from a sender device, the noisy encapsulated or encrypted message having been encapsulated or encrypted using a post-quantum cryptographic algorithm (100) and quantum key, QK, material derived from QK distribution with the sender device;
decapsulating or decrypting the received message using the corresponding QK used by the sender device;
decapsulating or decrypting the QK decapsulated or decrypted message using the corresponding post-quantum cryptographic algorithm (110) used by the sender; anc
outputting the message for use by the receiver device;
wherein the method further comprises choosing a secret and publishing a public key, wherein the received message comprises a codeword, wherein the codeword is generated by encoding the message using the published public key.

5. The computer-implemented method of claim 4, wherein the received message is a random message M of length L generated by the sending device using a random source.

6. The computer-implemented method of claim 4 or 5, wherein the received message comprises a ciphertext wherein a portion of the ciphertext is generated by corrupting or flipping random bits of a QK codeword, wherein the QK codeword is generated by using the quantum key material to compute an exclusive-OR, XOR, of the QK material with the codeword, and optionally,
wherein receiving the noisy encapsulated or encrypted message includes receiving the ciphertext from the sender device;
wherein decapsulating or decrypting the received message using the corresponding QK used by the sender device includes decapsulating or decrypting the portion of the ciphertext using the QK material; and
wherein decapsulating or decrypting the QK-decrypted message using the corresponding post-quantum cryptographic algorithm includes further decapsulating decrypting the portion of the ciphertext using the post-quantum cryptography algorithm, and optionally, further comprising:
generating a noisy codeword based on computing an exclusive-OR, XOR, of the QK material with the portion of the ciphertext; and
decapsulating or decrypting the noisy codeword by applying an error decoding algorithm to recover the encoded message.

7. A computer-implemented method of secure communication between a sender device and receiver device comprising:
encapsulating or encrypting, by the sender device, a message using a post-quantum cryptographic algorithm (100) and quantum key material, QK, derived from QK distribution with the receiver device;
adding noise, by the sender device, to the encapsulated or encrypted message; and
sending, by the sender device, the noisy encapsulated/encrypted message to the receiver device;
receiving, by the receiver device, the noisy encapsulated or encrypted message from the sender device;
decapsulating or decrypting, by the receiver device, the received message using the corresponding QK used by the sender device;
decapsulating or decrypting, by the receiver device, the QK- decapsulated/decrypted message using the corresponding post-quantum cryptographic algorithm (110) used by the sender and
outputting, by the receiver device, the message, wherein the method further comprises choosing, by the receiver device, a secret; and
publishing, by the receiver device, a public key, and wherein
encapsulating or encrypting the message includes encoding, by the sender device, the message using the published public key and the QK material to generate a codeword.

8. The computer-implemented method of claim 7, further comprising generating, by the sender device, a random message M of length L using a random source.

9. The computer-implemented method of claim 7 or 8, , and optionally, wherein encapsulating or encrypting the message includes generating, by the sender device, a QK codeword by using the quantum key material to compute an exclusive-OR, XOR, of the QK material with the codeword, and optionally,
wherein adding noise to the encapsulated or encrypted message includes generating, by the sender device, a ciphertext wherein a portion of the ciphertext is generated by corrupting or flipping random bits of the QK codeword; and
wherein sending the noisy encapsulated or encrypted message to the receiver device includes sending, by the sender device, the ciphertext to the receiver device, and optionally,
wherein receiving the noisy encapsulated or encrypted message includes receiving, by the receiver device, the ciphertext from the sender device;
wherein decapsulating or decrypting the received message using the corresponding QK used by the sender device includes decapsulating or decrypting, by the receiver device, the portion of the ciphertext using the QK material; and
wherein decapsulating or decrypting the QK- decapsulated or decrypted message using the corresponding post-quantum cryptography algorithm includes further decapsulating or decrypting, by the receiver device, the portion of the ciphertext, using the post-quantum cryptography algorithm, and optionally, further comprising:
generating, by the receiver device, a noisy codeword based on computing an exclusive OR, XOR, of the QK material with the received portion of the ciphertext; and
decapsulating or decrypting, by the receiver device, the noisy codeword by applying an error decoding algorithm to recover the encoded message.

10. The computer-implemented method of claim 6 or 9 wherein the error decoding algorithm is a medium density parity check code, MDPC, decoding algorithm.

11. The computer-implemented method according to any preceding claim
wherein the post-cryptographic algorithm is based on the bit-flipping key encapsulation, BIKE post quantum key encapsulation, KEM, cryptographic algorithm.

12. A sender apparatus comprising:
a processor unit;
a memory unit; and
a communication interface,
wherein the processor unit is connected to the memory unit and the communication interface, and
wherein the processor unit, memory unit and communication interface are adapted to implement the computer-implemented method as claimed in any of claims 1 to 3 or claim 11 as dependent on any of claims 1 to 3.

13. A receiver apparatus comprising:
a processor unit;
a memory unit; and
a communication interface,
wherein the processor unit connected to the memory unit and the communication interface, and
wherein the processor unit, memory unit and communication interface are adapted to implement the computer-implemented method as claimed in any of claims 4 to 6, or claim 10 as dependent on claim 6, or claim 11 as dependent on any of claims 4 to 6.

14. A system comprising:
a sender apparatus according to claim 12; and
a receiver apparatus according to claim 13;
wherein the sender apparatus and the receiver apparatus are configured to communicate with each other according to the computer-implemented method of any of claims 7 to 9, or claim 10 as dependent on claim 9, or claim 11 as dependent on any of claims 8 to 11.

15. A computer-readable medium comprising computer code or instructions stored thereon, which when executed on a processor or processors, causes the processor(s) to perform the computer-implemented method according to any of claims 1 to 11.

16. A computer program product comprising instructions which, when the program is executed by a computer or computers, cause the computer(s) to carry out the method of any of claims 1 to 11.

## Patentansprüche

1. Computerimplementiertes Verfahren zur sicheren Kommunikation für eine Sendervorrichtung, umfassend:
Einkapseln oder Verschlüsseln einer Nachricht unter Verwendung eines Post-Quanten-Kryptografiealgorithmus (100) und eines Quantenschlüssel-, QK-, Materials, das aus einer QK-Verteilung mit einer Empfängervorrichtung abgeleitet ist, wobei das Einkapseln oder Verschlüsseln der Nachricht das Codieren (106) der Nachricht unter Verwendung eines veröffentlichten öffentlichen Schlüssels und des QK-Materials einschließt, um ein Codewort zu generieren, wobei der veröffentlichte öffentliche Schlüssel von der Empfängervorrichtung (102) veröffentlicht wird;
Hinzufügen von Rauschen zu der eingekapselten oder verschlüsselten Nachricht; und
Senden der verrauschten eingekapselten oder verschlüsselten Nachricht an die Empfängervorrichtung.

2. Computerimplementiertes Verfahren nach Anspruch 1, weiter umfassend das Generieren einer Zufallsnachricht M der Länge L unter Verwendung einer Zufallsquelle.

3. Computerimplementiertes Verfahren nach einem vorstehenden Anspruch, wobei das Einkapseln oder Verschlüsseln der Nachricht das Generieren eines QK-Codeworts unter Verwendung des QK-Materials zum Berechnen eines Exklusiv-ODER (XOR) des QK-Materials mit dem Codewort einschließt, und optional,
wobei das Hinzufügen von Rauschen zu der eingekapselten oder verschlüsselten Nachricht das Generieren eines Chiffretextes einschließt, wobei ein Abschnitt des Chiffretextes durch Verfälschen oder Umkehren von zufälligen Bits des QK-Codeworts generiert wird; und
wobei das Senden der verrauschten eingekapselten oder verschlüsselten Nachricht an die Empfängervorrichtung das Senden des Chiffretexts an die Empfängervorrichtung einschließt.

4. Computerimplementiertes Verfahren zur sicheren Kommunikation für eine Empfängervorrichtung, umfassend:
Empfangen einer verrauschten eingekapselten oder verschlüsselten Nachricht von einer Sendervorrichtung, wobei die verrauschte eingekapselte oder verschlüsselte Nachricht unter Verwendung eines Post-Quanten-Kryptografiealgorithmus (100) und eines Quantenschlüssel-, QK-, Materials, das aus einer QK-Verteilung mit der Sendervorrichtung abgeleitet wurde, eingekapselt oder verschlüsselt wurde;
Entkapseln oder Entschlüsseln der empfangenen Nachricht unter Verwendung des entsprechenden QK, das von der Sendervorrichtung verwendet wird;
Entkapseln oder Entschlüsseln der entkapselten oder entschlüsselten QK-Nachricht unter Verwendung des entsprechenden, vom Sender verwendeten Post-Quanten-Kryptografiealgorithmus (110); und
Ausgeben der Nachricht zur Verwendung durch die Empfängervorrichtung;
wobei das Verfahren weiter das Auswählen eines Geheimnisses und das Veröffentlichen eines öffentlichen Schlüssels umfasst, wobei die empfangene Nachricht ein Codewort umfasst, wobei das Codewort durch Codieren der Nachricht unter Verwendung des veröffentlichten öffentlichen Schlüssels generiert wird.

5. Computerimplementiertes Verfahren nach Anspruch 4, wobei die empfangene Nachricht eine Zufallsnachricht M der Länge L ist, die von der Sendevorrichtung unter Verwendung einer Zufallsquelle generiert wurde.

6. Computerimplementiertes Verfahren nach Anspruch 4 oder 5, wobei die empfangene Nachricht einen Chiffretext umfasst, wobei ein Abschnitt des Chiffretextes durch Verfälschen oder Umkehren zufälliger Bits eines QK-Codeworts generiert wird, wobei das QK-Codewort unter Verwendung des Quantenschlüsselmaterials generiert wird, um ein Exklusiv-ODER, XOR, des QK-Materials mit dem Codewort zu berechnen, und optional,
wobei das Empfangen der verrauschten eingekapselten oder verschlüsselten Nachricht das Empfangen des Chiffretexts von der Sendervorrichtung einschließt;
wobei das Entkapseln oder Entschlüsseln der empfangenen Nachricht unter Verwendung des entsprechenden, von der Sendervorrichtung verwendeten QK das Entkapseln oder Entschlüsseln des Abschnitts des Chiffretextes unter Verwendung des QK-Materials einschließt; und
wobei das Entkapseln oder Entschlüsseln der entschlüsselten QK-Nachricht unter Verwendung des entsprechenden Post-Quanten-Kryptografiealgorithmus das weitere Entkapseln und Entschlüsseln des Abschnitts des Chiffretextes unter Verwendung des Post-Quanten-Kryptografiealgorithmus einschließt, und optional weiter umfassend:
Generieren eines verrauschten Codeworts basierend auf der Berechnung eines Exklusiv-ODER, XOR, des QK-Materials mit dem Abschnitt des Chiffretextes; und
Entkapseln oder Entschlüsseln des verrauschten Codeworts durch Anwenden eines Fehlerdecodierungsalgorithmus, um die codierte Nachricht wiederherzustellen.

7. Computerimplementiertes Verfahren zur sicheren Kommunikation zwischen einer Sendervorrichtung und einer Empfängervorrichtung, umfassend:
Einkapseln oder Verschlüsseln, durch die Sendervorrichtung, einer Nachricht unter Verwendung eines Post-Quanten-Kryptografiealgorithmus (100) und QuantenSchlüsselmaterials, QK, das aus der QK-Verteilung mit der Empfängervorrichtung abgeleitet ist;
Hinzufügen von Rauschen, durch die Sendervorrichtung, zu der eingekapselten oder verschlüsselten Nachricht; und
Senden, durch die Sendervorrichtung, der verrauschten eingekapselten/verschlüsselten Nachricht an die Empfängervorrichtung;
Empfangen, durch die Empfängervorrichtung, der verrauschten eingekapselten oder verschlüsselten Nachricht von der Sendervorrichtung;
Entkapseln oder Entschlüsseln, durch die Empfängervorrichtung, der empfangenen Nachricht unter Verwendung des entsprechenden QK, das von der Sendervorrichtung verwendet wird;
Entkapseln oder Entschlüsseln, durch die Empfängervorrichtung, der entkapselten/entschlüsselten QK-Nachricht unter Verwendung des entsprechenden, vom Sender verwendeten Post-Quanten-Kryptografiealgorithmus (110); und
Ausgeben, durch die Empfängervorrichtung, der Nachricht, wobei das Verfahren weiter das Auswählen, durch die Empfängervorrichtung, eines Geheimnisses umfasst; und
Veröffentlichen, durch die Empfängervorrichtung, eines öffentlichen Schlüssels, und wobei
das Einkapseln oder Verschlüsseln der Nachricht das Codieren, durch die Sendervorrichtung, der Nachricht unter Verwendung des veröffentlichten öffentlichen Schlüssels und des QK-Materials einschließt, um ein Codewort zu generieren.

8. Computerimplementiertes Verfahren nach Anspruch 7, weiter umfassend das Generieren, durch die Sendervorrichtung, einer Zufallsnachricht M der Länge L unter Verwendung einer Zufallsquelle.

9. Computerimplementiertes Verfahren nach Anspruch 7 oder 8, und optional, wobei das Einkapseln oder Verschlüsseln der Nachricht das Generieren, durch die Sendervorrichtung, eines QK-Codeworts unter Verwendung des Quantenschlüsselmaterials einschließt, um ein Exklusiv-ODER, XOR, des QK-Materials mit dem Codewort zu berechnen, und optional,
wobei das Hinzufügen von Rauschen zu der eingekapselten oder verschlüsselten Nachricht das Generieren, durch die Empfängervorrichtung, eines Chiffretextes durch die Sendervorrichtung, einschließt, wobei ein Abschnitt des Chiffretextes durch Verfälschen oder Umkehren von Zufallsbits des QK-Codewortes generiert wird; und
wobei das Senden der verrauschten eingekapselten oder verschlüsselten Nachricht an die Empfängervorrichtung das Senden des Chiffretexts, durch die Sendervorrichtung, an die Empfängervorrichtung einschließt, und optional,
wobei das Empfangen der verrauschten eingekapselten oder verschlüsselten Nachricht das Empfangen, durch die Empfängervorrichtung, des Chiffretexts von der Sendervorrichtung einschließt;
wobei das Entkapseln oder Entschlüsseln der empfangenen Nachricht unter Verwendung des entsprechenden, von der Sendervorrichtung verwendeten QK das Entkapseln oder Entschlüsseln, durch die Empfängervorrichtung, des Abschnitts des Chiffretextes unter Verwendung des QK-Materials einschließt; und
wobei das Entkapseln oder Entschlüsseln der entkapselten oder entschlüsselten QK-Nachricht unter Verwendung des entsprechenden Post-Quanten-Kryptografiealgorithmus das weitere Entkapseln oder Entschlüsseln, durch die Empfängervorrichtung, des Abschnitts des Chiffretexts unter Verwendung des Post-Quanten-Kryptografiealgorithmus einschließt, und wobei es optional weiter umfasst:
Generieren, durch die Empfängervorrichtung, eines verrauschten Codeworts basierend auf der Berechnung eines Exklusiv-ODER, XOR, des QK-Materials mit dem empfangenen Abschnitt des Chiffretextes; und
Entkapseln oder Entschlüsseln, durch die Empfängervorrichtung, des verrauschten Codeworts durch Anwenden eines Fehlerdecodierungsalgorithmus, um die codierte Nachricht wiederherzustellen.

10. Computerimplementiertes Verfahren nach Anspruch 6 oder 9, wobei der Fehlerdecodieralgorithmus ein Medium-Density-Parity-Check-Code-, MDPC-, Decodieralgorithmus ist.

11. Computerimplementiertes Verfahren nach einem vorstehenden Anspruch, wobei der Post-Kryptografiealgorithmus auf dem Bit-Flipping-Key-Encapsulation-, BIKE-, Post-Quantum-Key-Encapsulation-, KEM-, Kryptografiealgorithmus basiert.

12. Sendereinrichtung, umfassend:
eine Prozessoreinheit;
eine Speichereinheit; und
eine Kommunikationsschnittstelle,
wobei die Prozessoreinheit mit der Speichereinheit und der Kommunikationsschnittstelle verbunden ist, und
wobei die Prozessoreinheit, Speichereinheit und Kommunikationsschnittstelle dazu geeignet sind, das computerimplementierte Verfahren nach einem der Ansprüche 1 bis 3 oder Anspruch 11 in Abhängigkeit von einem der Ansprüche 1 bis 3 zu implementieren.

13. Empfängereinrichtung, umfassend:
eine Prozessoreinheit;
eine Speichereinheit; und
eine Kommunikationsschnittstelle,
wobei die Prozessoreinheit mit der Speichereinheit und der Kommunikationsschnittstelle verbunden ist, und
wobei die Prozessoreinheit, Speichereinheit und Kommunikationsschnittstelle dazu geeignet sind, das computerimplementierte Verfahren nach einem der Ansprüche 4 bis 6 oder Anspruch 10, in Abhängigkeit von Anspruch 6 oder Anspruch 11 in Abhängigkeit von einem der Ansprüche 4 bis 6 zu implementieren.

14. System, umfassend:
eine Sendereinrichtung nach Anspruch 12; und
eine Empfängereinrichtung nach Anspruch 13;
wobei die Sendereinrichtung und die Empfängereinrichtung konfiguriert sind, um miteinander gemäß dem computerimplementierten Verfahren nach einem der Ansprüche 7 bis 9 oder Anspruch 10, in Abhängigkeit von Anspruch 9 oder Anspruch 11 in Abhängigkeit von einem der Ansprüche 8 bis 11 zu kommunizieren.

15. Computerlesbares Medium, umfassend darauf gespeicherten Computercode oder Anweisungen, die, wenn sie auf einem Prozessor oder Prozessoren ausgeführt werden, den/die Prozessor(en) veranlassen, das computerimplementierte Verfahren nach einem der Ansprüche 1 bis 11 durchzuführen.

16. Computerprogrammprodukt, umfassend Anweisungen, die, wenn das Programm von einem Computer oder Computern ausgeführt wird, den/die Computer veranlassen, das Verfahren nach einem der Ansprüche 1 bis 11 auszuführen.

## Revendications

1. Procédé mis en œuvre par ordinateur de communications sécurisées pour un dispositif expéditeur comprenant :
l'encapsulation ou le cryptage d'un message à l'aide d'un algorithme cryptographique post-quantique (100) et d'un matériau à clé quantique, QK, dérivé de la distribution QK avec un dispositif récepteur, dans lequel l'encapsulation ou le cryptage du message inclut le codage (106) du message à l'aide d'une clé publique publiée et du matériau QK pour générer un mot de code, la clé publique publiée étant publiée par le dispositif récepteur (102) ;
l'ajout du bruit au message encapsulé ou crypté ; et
l'envoi du message encapsulé ou crypté bruyant au dispositif récepteur.

2. Procédé mis en œuvre par ordinateur selon la revendication 1, comprenant en outre la génération d'un message aléatoire M de longueur L à l'aide d'une source aléatoire.

3. Procédé mis en œuvre par ordinateur selon l'une quelconque des revendications précédentes, dans lequel l'encapsulation ou le cryptage du message inclut la génération d'un mot de code QK en utilisant le matériel QK pour calculer un OU exclusif (XOR) du matériel QK avec le mot de code, et éventuellement,
dans lequel l'ajout de bruit au message encapsulé ou crypté inclut la génération d'un texte chiffré, dans lequel une partie du texte chiffré est générée en corrompant ou en retournant des bits aléatoires du mot de code QK ; et
dans lequel l'envoi du message encapsulé ou crypté bruyant au dispositif récepteur inclut l'envoi du texte chiffré au dispositif récepteur.

4. Procédé mis en œuvre par ordinateur de communications sécurisées pour un dispositif récepteur comprenant :
la réception d'un message encapsulé ou crypté bruyant provenant d'un dispositif expéditeur, le message encapsulé ou chiffré bruyant ayant été encapsulé ou crypté à l'aide d'un algorithme cryptographique post-quantique (100) et d'un matériau de clé quantique, QK, dérivé de la distribution QK avec le dispositif expéditeur ;
la décapsulation ou le décryptage du message reçu à l'aide du QK correspondant utilisé par le dispositif expéditeur ;
la décapsulation ou le décryptage du message QK décapsulé ou décrypté en utilisant l'algorithme cryptographique post-quantique correspondant (110) utilisé par l'expéditeur ; et
la sortie du message pour utilisation par le dispositif récepteur ;
dans lequel le procédé comprend en outre le choix d'un secret et la publication d'une clé publique, dans lequel le message reçu comprend un mot de code, dans lequel le mot de code est généré en codant le message à l'aide de la clé publique publiée.

5. Procédé mis en œuvre par ordinateur selon la revendication 4, dans lequel le message reçu est un message aléatoire M de longueur L généré par le dispositif d'envoi à l'aide d'une source aléatoire.

6. Procédé mis en œuvre par ordinateur selon la revendication 4 ou 5, dans lequel le message reçu comprend un texte chiffré dont une partie est générée en corrompant ou en retournant des bits aléatoires d'un mot de code QK, le mot de code QK étant généré en utilisant le matériau de clé quantique pour calculer un OU exclusif, XOR, du matériau QK avec le mot de code, et éventuellement,
dans lequel la réception du message encapsulé ou chiffré bruyant inclut la réception du texte chiffré provenant du dispositif expéditeur ;
dans lequel la décapsulation ou le décryptage du message reçu à l'aide du QK correspondant utilisé par le dispositif expéditeur inclut la décapsulation ou le décryptage de la partie du texte chiffré à l'aide du matériel QK ; et
dans lequel la décapsulation ou le décryptage du message décrypté QK à l'aide de l'algorithme cryptographique post-quantique correspondant inclut en outre la décapsulation et le décryptage de la partie du texte chiffré à l'aide de l'algorithme cryptographique post-quantique, et éventuellement, comprenant en outre :
la génération d'un mot de code bruyant basé sur le calcul d'un OU exclusif, XOR, du matériel QK avec la partie du texte chiffré ; et
la décapsulation ou le décryptage du mot de code bruyant en appliquant un algorithme de décodage d'erreur pour récupérer le message codé.

7. Procédé mis en œuvre par ordinateur de communication sécurisée entre un dispositif émetteur et un dispositif récepteur comprenant :
l'encapsulation ou le cryptage, par le dispositif expéditeur, d'un message à l'aide d'un algorithme cryptographique post-quantique (100) et d'un matériel de clé quantique, QK, dérivé de la distribution QK avec le dispositif récepteur ;
l'ajout de bruit, par le dispositif de l'expéditeur, au message encapsulé ou crypté ; et
l'envoi, par le dispositif émetteur, du message encapsulé/crypté bruyant au dispositif récepteur ;
la réception, par le dispositif récepteur, du message encapsulé ou chiffré bruyant provenant du dispositif émetteur ;
la décapsulation ou le décryptage, par le dispositif récepteur, du message reçu en utilisant le QK correspondant utilisé par le dispositif émetteur ;
la décapsulation ou le décryptage, par le dispositif récepteur, du message QK-décapsulé/décrypté en utilisant l'algorithme cryptographique post-quantique correspondant (110) utilisé par l'expéditeur et
l'émission, par le dispositif récepteur, du message, le procédé comprenant en outre le choix, par le dispositif récepteur, d'un secret ; et
la publication, par le dispositif récepteur, d'une clé publique, et dans lequel
l'encapsulation ou le cryptage du message inclut le codage, par le dispositif expéditeur, du message à l'aide de la clé publique publiée et du matériel QK pour générer un mot de code.

8. Procédé mis en œuvre par ordinateur selon la revendication 7, comprenant en outre la génération, par le dispositif expéditeur, d'un message aléatoire M de longueur L à l'aide d'une source aléatoire.

9. Procédé mis en œuvre par ordinateur selon la revendication 7 ou 8, et facultativement, dans lequel l'encapsulation ou le cryptage du message inclut la génération, par le dispositif expéditeur, d'un mot de code QK en utilisant le matériau de clé quantique pour calculer un OU exclusif, XOR, du matériau QK avec le mot de code, et facultativement,
dans lequel l'ajout de bruit au message encapsulé ou crypté inclut la génération, par le dispositif expéditeur, d'un texte chiffré dans lequel une partie du texte chiffré est générée en corrompant ou en retournant des bits aléatoires du mot de code QK ; et
dans lequel l'envoi du message encapsulé ou chiffré bruyant au dispositif récepteur inclut l'envoi, par le dispositif expéditeur, du texte chiffré au dispositif récepteur, et éventuellement,
dans lequel la réception du message encapsulé ou chiffré bruyant inclut la réception, par le dispositif récepteur, du texte chiffré provenant du dispositif émetteur ;
dans lequel la décapsulation ou le décryptage du message reçu à l'aide du QK correspondant utilisé par le dispositif émetteur inclut la décapsulation ou le décryptage, par le dispositif récepteur, de la partie du texte chiffré à l'aide du matériel QK ; et
dans lequel la décapsulation ou le décryptage du message QK-décapsulé ou décrypté à l'aide de l'algorithme de cryptographie post-quantique correspondant inclut la décapsulation ou le décryptage supplémentaire, par le dispositif récepteur, de la partie du texte chiffré, à l'aide de l'algorithme de cryptographie post-quantique, et éventuellement, comprenant en outre :
la génération, par le dispositif récepteur, d'un mot de code bruyant basé sur le calcul d'un OU exclusif, XOR, du matériel QK avec la partie reçue du texte chiffré ; et
la décapsulation ou le décryptage, par le dispositif récepteur, du mot de code bruyant en appliquant un algorithme de décodage d'erreur pour récupérer le message codé.

10. Procédé mis en œuvre par ordinateur selon la revendication 6 ou 9, dans lequel l'algorithme de décodage d'erreur est un algorithme de décodage de contrôle de parité de densité moyenne, MDDPC.

11. Procédé mis en œuvre par ordinateur selon l'une quelconque des revendications précédentes, dans lequel l'algorithme post-cryptographique est basé sur l'encapsulation de clé à retournement BIKE, KEM, l'algorithme cryptographique.

12. Appareil émetteur comprenant :
une unité de processeur ;
une unité de mémoire ; et
une interface de communication,
dans lequel l'unité de processeur est connectée à l'unité de mémoire et à l'interface de communication, et
dans lequel l'unité de processeur, l'unité de mémoire et l'interface de communication sont adaptées pour mettre en œuvre le procédé mis en œuvre par ordinateur tel que revendiqué dans l'une quelconque des revendications 1 à 3 ou la revendication 11 telle que dépendante de l'une quelconque des revendications 1 à 3.

13. Appareil récepteur comprenant :
une unité de processeur ;
une unité de mémoire ; et
une interface de communication,
dans lequel l'unité de processeur est connectée à l'unité de mémoire et à l'interface de communication, et
dans lequel l'unité de processeur, l'unité de mémoire et l'interface de communication sont adaptées pour mettre en œuvre le procédé mis en œuvre par ordinateur tel que revendiqué dans l'une quelconque des revendications 4 à 6, ou la revendication 10 telle que dépendante de la revendication 6, ou la revendication 11 telle que dépendante de l'une quelconque des revendications 4 à 6.

14. Système comprenant :
- un appareil selon la revendication 12 ; et
un appareil selon la revendication 13 ;
dans lequel l'appareil émetteur et l'appareil récepteur sont configurés pour communiquer l'un avec l'autre selon le procédé mis en œuvre par ordinateur selon l'une quelconque des revendications 7 à 9, ou la revendication 10 telle que dépendante de la revendication 9, ou la revendication 11 telle que dépendante de l'une quelconque des revendications 8 à 11.

15. Support lisible par ordinateur comprenant un code ou des instructions informatiques enregistrés sur celui-ci, qui, lorsqu'ils sont exécutés par un processeur ou par des processeurs, amènent le(s) processeur(s) à effectuer le procédé selon l'une quelconque des revendications 1 à 11.

16. Produit de programme informatique comprenant des instructions qui, lorsque le programme est exécuté par un ordinateur, amènent l'ordinateur à mettre en œuvre le procédé selon l'une quelconque des revendications 1 à 11.
